# EUROPEAN PATENT SPECIFICATION

(11) **EP 1 501 216 B1**
(45) Date of publication and mention of the grant of the patent: **21.11.2007**
(21) Application number: 03722608.1
(22) Date of filing: 11.04.2003
(51) Int. Cl.: H04B 7/26, H04B 7/15, H04Q 7/20, H04B 7/005

(54) **ACCESS METHOD AND UMTS REPEATER SYSTEM WITH SPECTRAL EXCHANGE BETWEEN UMTS WAVE FREQUENCIES**
ZUGRIFFSVERFAHREN UND UMTS-ZWISCHENVERSTÄRKERSYSTEM MIT SPEKTRALAUSTAUSCH ZWISCHEN UMTS-WELLENFREQUENZEN
PROCEDE D'ACCES ET SYSTEME DE REPETEURS UMTS A ECHANGE SPECTRAL ENTRE LES BANDES DE FREQUENCE UMTS

(30) Priority: 12.04.2002 ES 200200862
(43) Date of publication of application: 26.01.2005
(73) Proprietor: Telefonica, S.A., 28013 Madrid (ES)
(72) Inventor: CUCALA GARCIA, Luis, 28043 MADRID (ES); WARZANSKYJ GARCIA, Wsewolod c/o Telefonica SA, 28043 MADRID (ES); LLUCH MESQUIDA, Cayetano, 28034 MADRID (ES)
(74) Representative: Carpintero Lopez, Francisco
(86) International application number: PCT/ES2003/000170
(87) International publication number: WO 2003/088525

(56) References cited:
- EP-A- 0 977 380
- EP-A1- 1 020 999
- EP-A2- 0 418 103
- EP-A2- 0 523 687
- US-A1- 2001 036 842
- US-B1- 6 373 833

## Description

### FIELD OF APPLICATION

This invention describes an access method and UMTS repeater system with spectral exchange between UMTS wave frequencies

The frequency bands employed are those actually assigned to the UMTS cellular system of mobile communications, whereby the system does not require the operator to obtain any extra allocation of frequency bands from the competent regulatory body. Also, other spectral interchange repeater systems are already known which require great accuracy in the frequencies used in the necessary frequency conversions and the allocation of frequency bands different to those employed by the cellular communications service, which is avoided by means of the system and method proposed.

### CURRENT STATE OF THE ART

The need is known for radiofrequency signal repeaters or retransmitters in diverse circumstances, such as the non-direct access on the part of the terminals to the transmit/receive centres when the distance between them is excessive or intervening obstacles are present. In general, the attenuation suffered in the level of the received signal does not allow communication between them, for which reason intermediate repeaters are required through which an indirect communication is allowed.

The use of is known of radiofrequency signal repeaters by means of spectral band change in many systems via radio, like for example that which has been employed for many years in television signal repeaters. In them, a transmitting centre transmits signals in a frequency band B1. This band is received by the remote repeater or retransmitter, which re-transmits the received band in another frequency band B2. The change of frequency bands avoids coupling or mutual interference between the transmitted signal and the received one. The repeater can carry out additional functions such as amplification and regeneration of the signal. It is thus achieved that remote terminals without direct access to the transmitting centre, can have access to said transmitting centre indirectly. When the communication has to be bidirectional as is the case of cellular communications, the repeater has to work in both directions of communication.

The UMTS cellular system is a system with CDMA channelling, having frequency bands assigned in accordance with the UMTS standard defined by ETSI. CDMA channelling allows several simultaneous communications to coincide both in frequency band and in transmission time used, the communications being separated by means of an identification code for each one of them. The coincidence in frequency band and transmission time causes a certain interference level to exist between the different communications in spite of the identification code, giving rise to some quite restrictive technical requirements in UMTS. All this is not described in detail since it is known from the state of the art, and more specifically from the systems which use CDMA channelling.

The technique of transparent connection in mobile communications is known by making use of a different frequency band in the radiolink present between the near and remote repeaters, with respect to the band employed between the base station and the near repeaters or between the remote repeaters and the remote terminals. This technique has advantages of operational simplicity, and also avoids undesired coupling between the transmitting and receiving antennas in the repeaters through using different frequency bands. All this simplifies the design of the repeaters and the installation process. On the other hand, this technique has the drawback of requiring the generation of signals with a very high frequency accuracy of up to 0.05 ppm according to the UMTS standard, which complicates the design of the repeaters and the final cost thereof. It also has the drawback of needing a specific frequency band for setting up the radiolink outside the UMTS standard, or of assuming the possible interference of users inside the UMTS specified band with the ensuing loss of operative capacity. Moreover, the radiolinks present between repeaters are subject to signal fading phenomena, which can cause a repeater to transmit excessive power in trying to offset the detected signal attenuations and distort the transmitted signal, since CDMA technology requires dynamic control of the transmitted power.

The introduction is not known from the state of the art of mechanisms which inhibit interference from cellular terminals in the communication between repeaters as is the case of phase distortion in the radiated signal, as is the object of the invention proposed. EP 0 977 380 represents the closest prior art.

### DESCRIPTION OF THE INVENTION

The present invention discloses the architecture of a repeater system for UMTS, and which is constituted by a UMTS cellular base station, one or several near repeaters, one or several remote repeaters and UMTS cellular remote terminals. Also, a complete system typically includes the presence of several base stations and both near and remote terminals.

The UMTS base station operates in one of the UMTS frequency bands according to the UMTS standard, giving UMTS cellular communications service to the near terminals inside its coverage area. It will also be connected to one or several near repeaters in one of the UMTS frequency bands by connection via cable.

In turn, a near repeater will communicate with one or several remote repeaters in another of the UMTS bands via radio, forwarding in the downlink direction the radio channels transmitted by the base station to the remote repeater, and receiving in the uplink direction the radio channel or radio channels from the remote repeater and forwarding them to the base station.

Each remote repeater will communicate with a near repeater in one of the UMTS bands and with the remote terminals in another of the UMTS bands. In the downlink direction, the radio channels coming from the near repeaters are translated in band and sent to the remote terminals in one of the UMTS bands. In the uplink direction, the radio channels transmitted by the remote terminals in one of the UMTS bands are forwarded to the near repeaters in another of the UMTS bands.

The remote terminals will communicate with the base station through the repeater system. From the functional point of view, the remote terminal will communicate with the remote repeater like any other near terminal directly connected to the base station.

It is pointed out that the frequency bands assigned in each hop of the communication are different to prevent mutual interference between the transmit and receive antennas in the repeaters. Said bands will be termed hereinafter UMTS-A for the hop between the base station (1) and the near repeaters (2) and for the hop between the remote repeaters (3) and the remote terminals (4), and UMTS-B for the hop between the near (2) and remote (3) repeaters. For simplicity in the descriptions the same UMTS-A frequency band has been chosen for the hop between the base station (1) and the near repeaters (2) and for the hop between the remote repeaters (3) and the remote terminals (4), although different frequency bands could also have been chosen.

Among the main characteristics of the repeater system for UMTS with spectral interchange between the UMTS frequency bands, are found:
- To prevent any terminal operating in the UMTS band from interfering with the communication between the near (2) and remote (3) repeaters, an object of this invention is the introduction of a mechanism for rejecting interfering terminals based on phase distortion of the signal transmitted between the near and remote repeaters to prevent the intrusion of UMTS cellular terminals in said communication between repeaters.
- An object of this invention is also the introduction of an equalisation mechanism in the receivers of the near (2) and remote (3) repeaters for communication between repeaters, offsetting the phase distortion effects introduced, and described in the previous point.
- An object of this invention is also the introduction of a mechanism for limiting the gain of the signal radiated by the near (2) and remote (3) repeaters, the object of which being to avoid distortion of the UMTS signal transmitted by the repeaters. The radiolinks present between repeaters are subject to signal fading phenomena, which can cause a repeater to transmit excessive power in trying to offset the detected signal attenuations and distort the transmitted signal, since CDMA technology requires dynamic control of the transmitted power. The opposite effect of over-propagation could also occur, in which excessive signal power is received.
- An object of this invention is also the introduction of a mechanism for cutting off transmission of the radio signal in the remote (3) and near (2) repeaters when the corresponding input signal is below a threshold adjustable by the operator. This characteristic is very beneficial in CDMA technology, this being a technology whose capacity is limited by the interference produced by the other simultaneous communications in the UMTS band used.

### BRIEF DESCRIPTION OF THE DRAWINGS

Figure 1 shows the architecture of the UMTS repeater system with spectral interchange between the UMTS frequency bands.
Figure 2 shows the architecture of the radiofrequency repeater module located in the repeater near to the base station using the assigned UMTS frequency band.
Figure 3 shows-the architecture of the radiofrequency repeater module located in the repeater remote from the base station using the assigned UMTS frequency band.

### DETAILED DESCRIPTION OF THE INVENTION

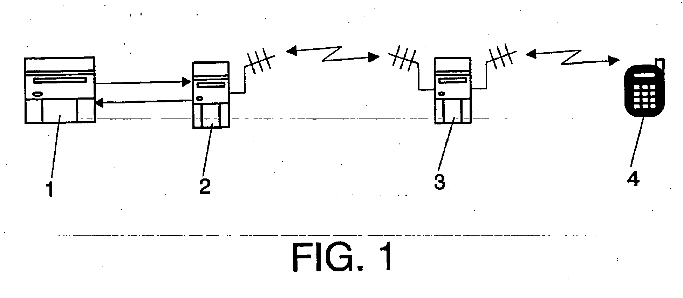

Figure 1 shows the entities involved in the architecture of the repeater system for UMTS with spectral interchange between the UMTS frequency bands: UMTS cellular base station (1) (also known as node B), near repeater (2), remote repeater (3) and UMTS cellular remote terminal (4).

There can be one or several near repeaters, remote repeaters and remote terminals. A complete system includes typically the presence of several base stations and terminals both near and remote. All this is not detailed in figure 1 as it is unnecessary from the point of view of describing the invention.

The UMTS base station (1) operates on one of the frequency bands allocated to UMTS (UMTS-A). Typically it will have sectorial antennas in order to increase the efficiency of the system as regards traffic and number of simultaneous near terminals supported. This base station (1) will have near terminals which will be connected directly via radio to said base station (1), and it will also be connected to one or several near repeaters (2) in one of the UMTS bands (UMTS-A) by connection via cable.

The near repeater (2) will communicate with the base station (1) in one of the UMTS bands (UMTS-A) via cable and with the remote repeater (3) (one or several remote repeaters) in another UMTS band (UMTS-B) via radio. The near repeater (2) will receive the radio channels transmitted by the base station (1) in the downlink direction and it will forward them to the remote repeater (3). Typically, the communication with the base station (1) and with the remote repeater (3) will be carried out using directional antennas to increase communication efficiency, although it is also possible to use omnidirectional antennas. In the uplink direction, the near repeater (2) will receive the radio channel or radio channels from the remote repeater (3) and it will forward them to the base station (1).

The remote repeater (3) will communicate with the near repeater (2) in one of the UMTS bands (UMTS-B) and with the remote terminals (4) in another of the UMTS bands (UMTS-A). The remote repeaters (3) typically will use directional antennas for communication with the near repeaters (2) and sectorial antennas for communication with the remote terminals (4). In the downlink direction, the radio channels coming from the near repeaters in the UMTS band (UMTS-B) are translated to the other UMTS band (UMTS-A) and sent to the remote terminals (4). In the uplink direction, the radio channels transmitted by the remote terminals (4) in the UMTS band (UMTS-A) are forwarded to the near repeaters in the other UMTS band (UMTS-B).

The remote terminals (4) will communicate with the remote repeater (3) in one of the UMTS bands (UMTS-A). In fact they will communicate with the base station (1) through the repeater system. From the functional point of view, the remote terminal (4) will communicate with the remote repeater like any other near terminal directly connected to the base station (1).

Among the main characteristics of the repeater system for UMTS with spectral interchange between the UMTS frequency bands, is:
- To prevent any terminal operating in the UMTS band from interfering with the communication between the near (2) and remote (3) repeaters, an object of this invention is the introduction of a mechanism for rejecting interfering terminals based on phase distortion of the signal transmitted between the near and remote repeaters to prevent the intrusion of UMTS cellular terminals in said communication between repeaters.
- An object of this invention is also the introduction of an equalisation mechanism in the receivers of the near (2) and remote (3) repeaters for communication between repeaters, offsetting the phase distortion effects introduced, and described in the previous point.
- An object of this invention is also the introduction of a mechanism for limiting the gain of the signal radiated by the near (2) and remote (3) repeaters, the object of which being to avoid distortion of the UMTS signal transmitted by the repeaters. The radiolinks present between repeaters are subject to signal fading phenomena, which can cause a repeater to transmit excessive power in trying to offset the detected signal attenuations and distort the transmitted signal, since CDMA technology requires dynamic control of the transmitted power. The opposite effect of over-propagation could also occur, in which excessive signal power is received.
- An object of this invention is also the introduction of a mechanism for cutting off transmission of the radio signal in the remote (3) and near (2) repeaters when the corresponding input signal is below a threshold adjustable by the operator. This characteristic is very beneficial in CDMA technology, this being a technology whose capacity is limited by the interference produced by the other simultaneous communications in the UMTS band used.

In figure 1, the letters A to C denote the interfaces between the various entities. These interfaces are:
A- Interface between the base station (1) and the near repeaters (2). This interface is via cable on one of the UMTS bands (UMTS-A) according to the ETSI standard.
B- Interface between the near repeaters (2) and the remote repeaters (3). This interface is via radio on one of the UMTS bands (UMTS-B) according to the ETSI standard.
C- Interface between the remote repeaters (3) and the remote terminals (4). This interface is via radio on one of the UMTS bands (UMTS-A) according to the ETSI standard.

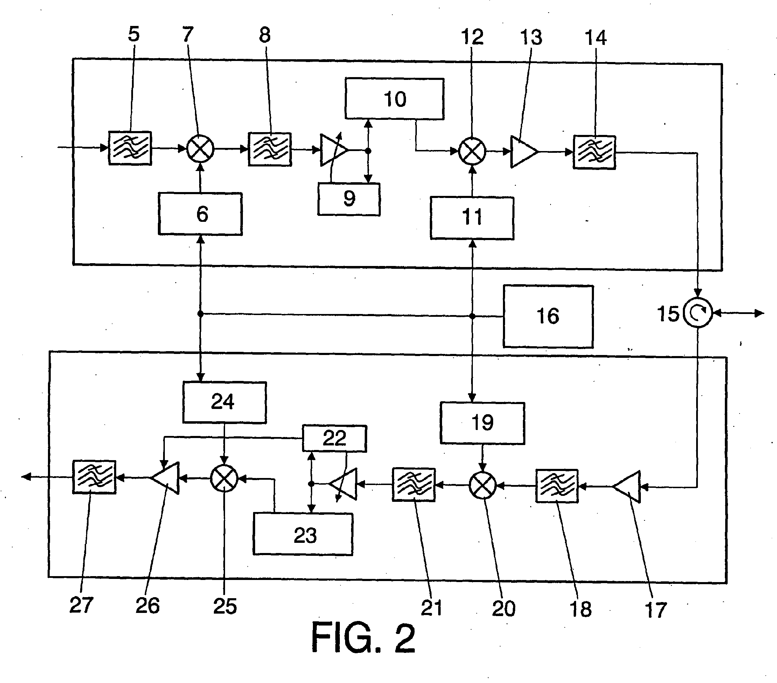

Figure 2 shows the main entities of the preferred architecture of the radiofrequency repeater module located in the repeater near the base station using spectral interchange between the UMTS bands. In the downlink subunit: UMTS band filter (5), first synthesizer (6), first mixer (7), intermediate band filter (8), adjustable gain and control amplifier (9), (10), second synthesizer (11), second mixer (12), power amplifier distortion circuit (13) and UMTS band filter (14). In the uplink subunit: UMTS low noise amplifier (17), UMTS band filter (18), first synthesizer (19), first mixer (20), intermediate band filter (21), adjustable gain amplifier (22), equaliser (23), second synthesizer (24), second mixer (25), UMTS line amplifier (26) and band filter (27). Other modules: UMTS duplexer (15) and clock reference (16).

Other modules are not detailed in this figure, such as the UMTS antennas and the near repeater control module.

In the downlink subunit a single UMTS channel is received via cable from the base station (1) in one of the UMTS bands, which after mixing (7) with a first local oscillator (6) is converted into an intermediate frequency signal. The intermediate frequency signal is adjusted in gain (9) according to the established gain control. At this point the signal is distorted (10) in phase.

Then it is again mixed (12) with the signal from a second oscillator (11) to obtain the UMTS signal which will be amplified (13) and transmitted to the remote repeater (3).

In a similar way, in the uplink subunit a UMTS channel is received from the remote repeater (3) in one of the UMTS bands, which after mixing (20) with a first local oscillator (19) is converted into an intermediate frequency signal. The intermediate frequency signal is adjusted in gain (22) according to the established gain control. The intermediate frequency signal is equalised (23) to offset the effects introduced by the distortion in the transmission in the remote repeater (48). The intermediate frequency signal is again mixed (25) with a second oscillator (24) to obtain the UMTS signal which will be transmitted via cable to the base station (1).

Independently, a synchronisation signal (16) is generated and used by all the synthesizers both for the downlink and uplink subunit, whereby the frequency accuracy can be ensured in all of them. The accuracy of the synchronisation signal generator (16) will be better than 1 ppm.

The phase distortion mechanism (10) in the downlink connection introduces a non-linear phase distortion of more than 1000 picoseconds which prevents any UMTS terminal being connected to the band employed, since the distortion introduced makes the signal unrecognisable for said UMTS terminal.

The equalisation mechanism (23) in the uplink connection offsets the distortion (48) introduced in the transmitter of the remote repeater (3).

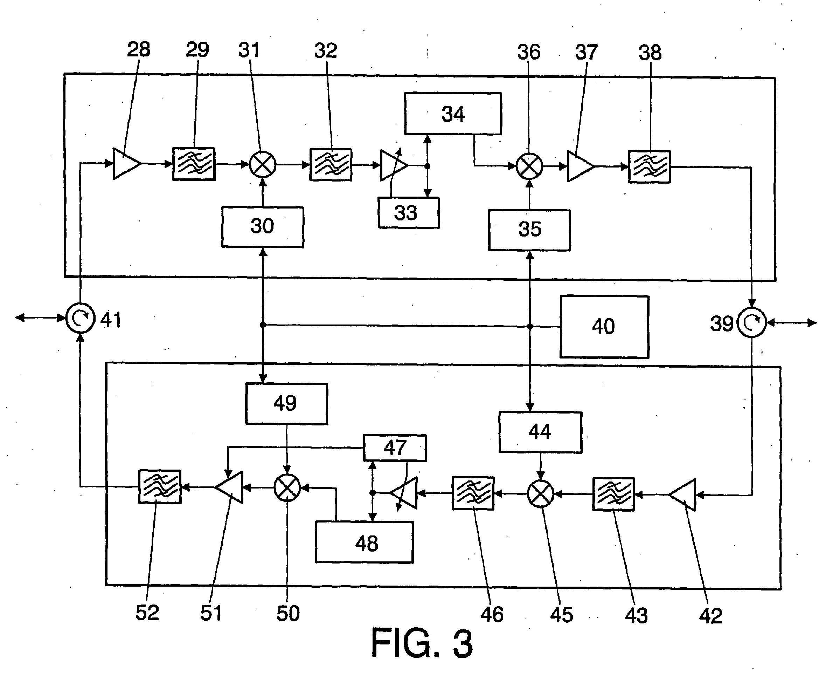

Figure 3 shows the main entities of the preferred architecture of the radiofrequency repeater module located in the remote repeater at the base station using spectral interchange between the UMTS bands. In the downlink subunit: low noise amplifier (28), UMTS band filter (29), first synthesizer (30), first mixer (31), intermediate band filter (32), adjustable gain and control amplifier (33), equaliser (34), second synthesizer (35), second mixer (36), power amplifier (37) and UMTS band filter (38). In the uplink subunit: UMTS low noise amplifier (42), UMTS band filter (43), first synthesizer (44), first mixer (45), intermediate band filter (46), adjustable gain amplifier (47), distortion circuit (48), second synthesizer (49), second mixer (50), UMTS power amplifier (51) and band filter (52). Other modules: UMTS duplexer (39) addressing the remote terminals, UMTS duplexer addressing the near repeater (41) and clock reference (40).

Other modules are not detailed in this figure such as the UMTS antennas and the remote repeater control module.

In the downlink subunit a single UMTS channel is received via radio from the near repeater (2) in one of the UMTS bands which, after mixing (31) with a first local oscillator (30) is converted into an intermediate frequency signal. The intermediate frequency signal is adjusted in gain (33) according to the established gain control, performing gain limitation functions to prevent distortion of the UMTS signal in the event of over-propagation in the radiolink. The intermediate frequency signal is equalised (34) to offset the effects introduced by distortion in the transmission in the near repeater (10). Then it is again mixed (36) with the signal from a second oscillator (35) to obtain the UMTS signal which will be amplified (37) and transmitted to the remote UMTS terminals (4).

In a similar way, in the uplink subunit a UMTS channel is received from the remote terminals (4) in one of the UMTS bands, which after mixing (45) with a first local oscillator (44) is converted into an intermediate frequency signal. The intermediate frequency signal is adjusted in gain (47) according to the established gain control, performing gain limitation functions to prevent distortion of the UMTS signal in the case of over-propagation in the radiolink. At this point the signal is distorted (48) in phase. The intermediate frequency signal is again mixed (50) with a second oscillator (49) to obtain the UMTS signal which will be transmitted via cable to the near repeater (2) once amplified (51). The amplifier (51) can be inhibited when the received signal does not surpass a threshold preset by the operator.

Independently, a synchronisation signal (40) is generated and used by all the synthesizers both for the downlink and uplink subunit, whereby the frequency accuracy can be ensured in all of them. The accuracy of the synchronisation signal generator (40) will be better than 1 ppm.

The phase distortion mechanism (48) in the uplink connection introduces a non-linear phase distortion of more than 1000 picoseconds which prevents any UMTS terminal being connected to the band employed, since the distortion introduced makes the signal unrecognisable for said UMTS terminal.

The equalisation mechanism (34) in the downlink connection offsets the distortion (10) introduced in the transmitter of the near repeater (2).

### DEFINITIONS AND ABBREVIATIONS

- CDMA: Code division multiple access. Technology used to separate the different user data channels like for example in the UMTS cellular communication system.
- ETSI: European telecommunications standards institute.
- MHz: Megahertz. Electric frequency unit of measurement.
- ppm: Parts per million. Employed typically to measure the accuracy of frequency synthesizers.
- TDMA: Time division multiple access. Technology used to separate the different user data channels like for example in the GSM cellular communication system.
- UMTS: Cellular universal mobile telecommunications system. Third generation cellular communications system.

## Claims

1. Repeater system for UMTS with spectral interchange between the UMTS frequency bands, in which different frequency bands are used for the repeaters (2, 3) to communicate with the UMTS base station (1) and UMTS remote terminals (4) and between said repeaters, comprising near repeaters (2) connected to the base station in one UMTS band, and remote repeaters (3) connected to the near repeaters in another UMTS band, **characterised in that** it includes a mechanism for rejecting interfering terminals based on phase distortion of the signal transmitted between the near and remote repeaters to prevent the intrusion of UMTS cellular terminals in said communication between repeaters.

2. Repeater system for UMTS with spectral interchange between the UMTS frequency bands according to claim 1 **characterised in** having cellular terminals connected in the UMTS band.

3. Repeater system for UMTS with spectral interchange between the UMTS frequency bands according to claims 1 to 2 **characterised in** using an equalisation mechanism in the receivers of the near and remote repeaters for communication between repeaters, offsetting the effects of phase distortion.

4. Repeater system for UMTS with spectral interchange between the UMTS frequency bands according to claims 1 to 3 **characterised by** a mechanism of gain limitation of radiated and received signal in the near and remote repeaters.

5. Repeater system for UMTS with spectral interchange between the UMTS frequency bands according to claims 1 to 3 **characterised in** having a mechanism of cutting off transmission of the radio signal in the near and remote repeaters when the corresponding input signal is below a threshold adjustable by the operator.

6. Access method of the repeater system for UMTS with spectral. interchange between the UMTS frequency bands, using different frequency bands for the near and remote repeaters to communicate with the UMTS base station and UMTS remote terminals and between this repeaters, the method using near repeaters connected to the base station in one UMTS band, and remote repeaters connected to the near repeaters in another UMTS band, **characterised in that** it uses a mechanism for rejecting interfering terminals based on phase distortion of the signal transmitted between the near and remote repeaters to prevent the intrusion of UMTS cellular terminals in said communication between repeaters.

7. Access method of the repeater system for UMTS with spectral interchange between the UMTS frequency bands according to claim 6 **characterised in** having cellular terminals connected in the UMTS band.

8. Access method of the repeater system for UMTS with spectral interchange between the UMTS frequency bands according to claims 6 to 7 **characterised in** using an equalisation mechanism in the receivers of the near and remote repeaters for communication between repeaters, offsetting the effects of phase distortion.

9. Access method of the repeater system for UMTS with spectral interchange between the UMTS frequency bands according to claims 6 to 8 **characterised by** a mechanism of gain limitation of radiated and received signal in the near and remote repeaters.

10. Access method of the repeater system for UMTS with spectral interchange between the UMTS frequency bands according to claims 6 to 8 **characterised by** a mechanism of cutting off transmission of the radio signal in the near and remote repeaters when the corresponding input signal is below a threshold adjustable by the operator.

## Patentansprüche

1. Zwischenverstärkersystem für UMTS mit Spektralaustausch zwischen den UMTS-Frequenzbändern, in dem für die Zwischenverstärker (2, 3) verschiedene Frequenzbänder verwendet werden, um mit der UMTS-Basisstation (1) und mit UMTS-Fernendgeräten (4) sowie zwischen den Zwischenverstärkern zu kommunizieren, wobei das Zwischenverstärkersystem Nahzwischenverstärker (2), die mit der Basisstation in einem UMTS-Band verbunden sind, und Fernzwischenverstärker (3), die mit den Nahzwischenverstärkern in einem anderen UMTS-Band verbunden sind, umfaßt, **dadurch gekennzeichnet, daß** es einen Mechanismus enthält, um störende Endgeräte auf der Grundlage der Phasenverzerrung des zwischen den Nah- und den Fernzwischenverstärkern übertragenen Signals zurückzuweisen, um das Aufschalten von UMTS-Zellenendgeräten in die Kommunikation zwischen den Zwischenverstärkern zu verhindern.

2. Zwischenverstärkersystem für UMTS mit Spektralaustausch zwischen den UMTS-Frequenzbändern nach Anspruch 1, **dadurch gekennzeichnet, daß** es Zellenendgeräte besitzt, die in dem UMTS-Band verbunden sind.

3. Zwischenverstärkersystem für UMTS mit Spektralaustausch zwischen den UMTS-Frequenzbändern nach den Ansprüchen 1 bis 2, **dadurch gekennzeichnet, daß** es in den Empfängern der Nah- und der Fernzwischenverstärker für die Kommunikation zwischen Zwischenverstärkern einen Entzerrungsmechanismus verwendet, der die Wirkungen der Phasenverzerrung ausgleicht.

4. Zwischenverstärkersystem für UMTS mit Spektralaustausch zwischen den UMTS-Frequenzbändern nach den Ansprüchen 1 bis 3, **gekennzeichnet durch** einen Mechanismus der Verstärkungsbegrenzung des abgestrahlten und des empfangenen Signals in den Nah- und in den Fernzwischenverstärkern.

5. Zwischenverstärkersystem für UMTS mit Spektralaustausch zwischen den UMTS-Frequenzbändern nach den Ansprüchen 1 bis 3, **dadurch gekennzeichnet, daß** es einen Mechanismus besitzt, um die Sendung des Funksignals in den Nah- und in den Fernzwischenverstärkern abzuschalten, wenn das entsprechende Eingangssignal unter einem durch den Betreiber einstellbaren Schwellenwert liegt.

6. Zugriffsverfahren des Zwischenverstärkersystems für UMTS mit Spektralaustausch zwischen den UMTS-Frequenzbändern, das für die Nah- und für die Fernzwischenverstärker verschiedene Frequenzbänder verwendet, um mit der UMTS-Basisstation und mit UMTS-Fernendgeräten sowie zwischen diesen Zwischenverstärkern zu kommunizieren, wobei das Verfahren Nahzwischenverstärker, die mit der Basisstation in einem UMTS-Band verbunden sind, und Fernzwischenverstärker, die mit den Nahzwischenverstärkern in einem anderen UMTS-Band verbunden sind, verwendet, **dadurch gekennzeichnet, daß** es einen Mechanismus verwendet, um störende Endgeräte auf der Grundlage der Phasenverzerrung des zwischen den Nah- und den Fernzwischenverstärkern übertragenen Signals zurückzuweisen, um das Aufschalten von UMTS-Zellenendgeräten in die Kommunikation zwischen den Zwischenverstärkern zu verhindern.

7. Zugriffsverfahren des Zwischenverstärkersystems für UMTS mit Spektralaustausch zwischen den UMTS-Frequenzbändern nach Anspruch 6, **dadurch gekennzeichnet, daß** es Zellenendgeräte besitzt, die in dem UMTS-Band verbunden sind.

8. Zugriffsverfahren des Zwischenverstärkersystems für UMTS mit Spektralaustausch zwischen den UMTS-Frequenzbändern nach den Ansprüchen 6 bis 7, **dadurch gekennzeichnet, daß** es in den Empfängern der Nah- und der Fernzwischenverstärker für die Kommunikation zwischen Zwischenverstärkern einen Entzerrungsmechanismus verwendet, der die Wirkungen der Phasenverzerrung ausgleicht.

9. Zugriffsverfahren des Zwischenverstärkersystems für UMTS mit Spektralaustausch zwischen den UMTS-Frequenzbändern nach den Ansprüchen 6 bis 8, **gekennzeichnet durch** einen Mechanismus der Verstärkungsbegrenzung des abgestrahlten und des empfangenen Signals in den Nah- und in den Fernzwischenverstärkern.

10. Zugriffsverfahren des Zwischenverstärkersystems für UMTS mit Spektralaustausch zwischen den UMTS-Frequenzbändern nach den Ansprüchen 6 bis 8, **gekennzeichnet durch** einen Mechanismus, um die Sendung des Funksignals in den Nah- und in den Fernzwischenverstärkern abzuschalten, wenn das entsprechende Eingangssignal unter einem **durch** den Betreiber einstellbaren Schwellenwert liegt.

## Revendications

1. Système de répéteur pour UMTS à échange spectral entre les bandes de fréquence UMTS, dans lequel des bandes de fréquence différentes sont utilisées pour les répéteurs (2, 3) afin de communiquer avec la station de base UMTS (1) et les terminaux UMTS éloignés (4) et entre lesdits répéteurs, comprenant des répéteurs proches (2) connectés à la station de base dans une bande UMTS, et des répéteurs éloignés (3) connectés aux répéteurs proches dans une autre bande UMTS, **caractérisé en ce qu'**il inclut un mécanisme permettant de rejeter les terminaux de brouillage basé sur la distorsion de phase du signal transmis entre les répéteurs proches et éloignés, afin d'empêcher toute intrusion des terminaux cellulaires UMTS dans ladite communication entre les répéteurs.

2. Système de répéteur pour UMTS à échange spectral entre les bandes de fréquence UMTS selon la revendication 1, **caractérisé en ce qu'**il a des terminaux cellulaires connectés dans les bandes UMTS.

3. Système de répéteur pour UMTS à échange spectral entre les bandes de fréquence UMTS selon les revendications 1 à 2, **caractérisé en ce qu'**il utilise un mécanisme d'égalisation dans les récepteurs des répéteurs proches et éloignés pour une communication entre les répéteurs, compensant les effets de la distorsion de phase.

4. Système de répéteur pour UMTS à échange spectral entre les bandes de fréquence UMTS selon les revendications 1 à 3, **caractérisé par** un mécanisme de limitation de gain de signal diffusé et reçu dans les répéteurs proches et éloignés.

5. Système de répéteur pour UMTS à échange spectral entre les bandes de fréquence UMTS selon les revendications 1 à 3, **caractérisé en ce qu'**il a un mécanisme d'arrêt de la transmission du signal radio dans les répéteurs proches et éloignés lorsque le signal d'entrée correspondant est en dessous d'un seuil réglable par l'opérateur.

6. Procédé d'accès du système de répéteur pour UMTS à échange spectral entre les bandes de fréquence UMTS, utilisant différentes bandes de fréquence pour les répéteurs proches et éloignés afin de communiquer avec la station de base UMTS et les terminaux éloignés UMTS et entre ces répéteurs, le procédé utilisant des répéteurs proches connectés à la station de base dans une bande UMTS, et des répéteurs éloignés connectés aux répéteurs proches dans une autre bande UMTS, **caractérisé en ce qu'**il utilise un mécanisme permettant de rejeter les terminaux de brouillage basé sur la distorsion de phase du signal transmis entre les répéteurs proches et éloignés pour empêcher l'intrusion de terminaux cellulaires UMTS dans ladite communication entre les répéteurs.

7. Procédé d'accès du système de répéteur pour UMTS à échange spectral entre les bandes de fréquence UMTS selon la revendication 6, **caractérisé en ce qu'**il y a des terminaux cellulaires connectés dans la bande UMTS.

8. Procédé d'accès du système de répéteur pour UMTS à échange spectral entre les bandes de fréquence UMTS selon les revendications 6 à 7, **caractérisé en ce qu'**il utilise un mécanisme d'égalisation dans les récepteurs des répéteurs proches et éloignés pour une communication entre les répéteurs, compensant les effets de distorsion de phase.

9. Procédé d'accès du système de répéteur pour UMTS à échange spectral entre les bandes de fréquence UMTS selon les revendications 6 à 8, **caractérisé par** un mécanisme de limitation de gain du signal diffusé et reçu dans les répéteurs proches et éloignés.

10. Procédé d'accès du système de répéteur pour UMTS à échange spectral entre les bandes de fréquence UMTS selon les revendications 6 à 8, **caractérisé par** un mécanisme d'arrêt de transmission du signal radio dans les répéteurs proches et éloignés, lorsque le signal d'entrée correspondant est en dessous d'un seuil réglable par l'opérateur.
